(19) **Europäisches Patentamt**
**European Patent Office**
**Office européen des brevets**

(11) **EP 1 697 947 B1**

(12) **FASCICULE DE BREVET EUROPEEN**

(45) Date de publication et mention
de la délivrance du brevet:
**05.09.2007 Bulletin 2007/36**

(21) Numéro de dépôt: **04805654.3**

(22) Date de dépôt: **07.12.2004**

(51) Int Cl.:
*G21C 3/33* *(2006.01)*

(86) Numéro de dépôt international:
**PCT/FR2004/003142**

(87) Numéro de publication internationale:
**WO 2005/071693 (04.08.2005 Gazette 2005/31)**

(54) **PROCEDE DE LIMITATION DES EFFORTS DE MAINTIEN EXERCES SUR UN ASSEMBLAGE DE COMBUSTIBLE D' UN REACTEUR NUCLEAIRE ET ASSEMBLAGE DE COMBUSTIBLE**

**VERFAHREN ZUR BEGRENZUNG VON HALTEKRÄFTEN AN EINEM KERNREAKTOR-BRENNSTABBÜNDEL UND BRENNSTABBÜNDEL**

**METHOD FOR LIMITING HOLDING FORCES ON A NUCLEAR REACTOR FUEL ASSEMBLY AND FUEL ASSEMBLY**

(84) Etats contractants désignés:
**AT BE BG CH CY CZ DE DK EE ES FI FR GB GR HU IE IS IT LI LT LU MC NL PL PT RO SE SI SK TR**

(30) Priorité: **22.12.2003 FR 0315187**

(43) Date de publication de la demande:
**06.09.2006 Bulletin 2006/36**

(73) Titulaire: **Areva NP**
**92400 Courbevoie (FR)**

(72) Inventeurs:
• **CHAMBRIN, Jean-Luc**
**F-45210 GRISELLES (FR)**
• **BEATI, Angelo**
**F-69003 LYON (FR)**
• **GENTET, Guy**
**F-69003 LYON (FR)**

(74) Mandataire: **Domenego, Bertrand et al**
**Cabinet Lavoix**
**2, place d'Estienne d'Orves**
**75441 Paris Cedex 09 (FR)**

(56) Documents cités:
| | |
|---|---|
| **EP-A- 0 036 820** | **FR-A- 1 346 377** |
| **FR-A- 2 493 443** | **FR-A- 2 582 137** |
| **US-A- 4 134 790** | |

EP 1 697 947 B1

# Description

L'invention concerne un procédé et un dispositif de limitation des efforts de maintien exercés sur un assemblage de combustible d'un réacteur nucléaire pour compenser la poussée hydraulique d'eau de refroidissement traversant l'assemblage de combustible en service dans le réacteur nucléaire.

On connaît des assemblages de combustible pour des réacteurs nucléaires refroidis par de l'eau et en particulier pour les réacteurs nucléaires refroidis par de l'eau sous pression qui comportent un faisceau de crayons combustibles parallèles entre eux maintenus dans une ossature fermée à ses extrémités par des embouts de direction transversale par rapport à la direction longitudinale axiale de l'assemblage de combustible.

Dans le cas des réacteurs nucléaires à eau sous pression, les assemblages de combustible présentent généralement la forme d'un parallélépipède à base carrée de grande longueur, dans la direction axiale, par exemple quatre mètres ou plus, ayant une section dont le côté a une longueur voisine de 0,20 m. Les embouts de l'assemblage de combustible sont de forme carrée, l'un des embouts situé à une première extrémité de l'assemblage de combustible qui est en partie basse de l'assemblage de combustible dans le réacteur en service constitue l'embout inférieur et comporte, suivant chacun de ses angles, un pied destiné à venir en appui sur une plaque de support de coeur ou plaque inférieure de coeur. Deux des pieds situés suivant une diagonale de l'embout inférieur sont traversés par des ouvertures destinées à recevoir chacune un pion de centrage de l'assemblage de combustible en saillie dans la direction verticale et vers le haut sur la plaque inférieure de coeur. Lorsqu'on dépose l'assemblage de combustible sur la plaque inférieure de coeur, on engage les deux ouvertures de l'embout inférieur sur deux pions de la plaque inférieure de coeur destinés à assurer le positionnement de l'assemblage de combustible à l'aplomb de trous de passage d'eau traversant la plaque inférieure de coeur. L'embout fixé à la seconde extrémité de l'assemblage de combustible, destiné à venir en partie haute lors de la mise en place de l'assemblage de combustible dans le coeur du réacteur nucléaire, appelé embout supérieur, comporte en particulier des ressorts d'appui à lames sur sa surface supérieure et deux ouvertures de centrage suivant deux angles de la section carrée de l'embout supérieur. Les ouvertures de centrage de l'embout supérieur de l'assemblage de combustible sont prévues pour recevoir des pions de centrage en saillie sous une plaque supérieure de coeur destinée à venir reposer sur la partie supérieure des assemblages de combustible du coeur comportant les ressorts d'appui à lames. La plaque supérieure du réacteur nucléaire constitue la partie inférieure des équipements internes supérieurs du réacteur nucléaire qui sont mis en place au-dessus du coeur, après chargement des assemblages de combustible dans la cuve du réacteur nucléaire, de manière à assurer le maintien des assemblages de combustible du coeur. Lors de la mise en place de la plaque supérieure de coeur au-dessus des assemblages de combustible disposés dans le coeur du réacteur, les pions de centrage de la plaque supérieure du coeur disposés au niveau de chacun des assemblages de combustible viennent s'engager dans les ouvertures de centrage de l'embout supérieur de l'assemblage de combustible.

Les pions de centrage de la plaque inférieure de coeur et de la plaque supérieure de coeur ont une partie d'engagement de forme tronconique et un corps cylindrique dont le diamètre est légèrement inférieur au diamètre de l'ouverture de centrage. Les pions de centrage assurent donc un maintien des assemblages de combustible dans les directions transversales perpendiculaires à la direction longitudinale axiale et dans la direction longitudinale en autorisant toutefois des déplacements longitudinaux pour absorber des dilatations différentielles dans le réacteur en service, les assemblages de combustible étant maintenus dans la direction axiale par les ressorts à lames susceptibles de se déformer par flexion. Dans le réacteur en service, l'eau de refroidissement sous pression du réacteur nucléaire traverse les assemblages de combustible dans leur direction longitudinale axiale et les soumet de ce fait à une poussée hydraulique dans la direction verticale et de bas en haut qui se traduit par des efforts exercés sur la structure de l'assemblage de combustible et par un léger déplacement des assemblages de combustible dans la direction axiale et par des vibrations latérales. Pour compenser la poussée hydraulique et pour éviter un déplacement trop important de l'assemblage de combustible sous l'effet de la poussée hydraulique, il est nécessaire de prévoir des ressorts à lames qui ont de fortes caractéristiques. De tels ressorts à lames exercent des efforts de compression importants sur la structure de l'assemblage de combustible, si bien qu'il est nécessaire de prévoir des ossatures d'assemblages extrêmement résistantes, ces ossatures subissant de très grands efforts dans le réacteur en service.

En outre, lors de régimes transitoires au cours desquels le débit de l'eau de refroidissement est susceptible de varier de manière rapide au cours du temps, l'assemblage de combustible peut effectuer des oscillations et son embout inférieur, lors de la retombée de l'assemblage de combustible sous l'effet de la poussée des ressorts à lames, peut venir frapper la plaque inférieure de coeur, ce qui peut occasionner une usure et une détérioration lors d'utilisations de longue durée d'assemblages de combustible dans un réacteur nucléaire.

Il est donc nécessaire de limiter au maximum les efforts de maintien exercés sur les assemblages de combustible pour compenser la poussée hydraulique de l'eau de refroidissement traversant l'assemblage de combustible.

On a proposé, dans le FR-A-2.479.535, un dispositif de limitation des effets de la poussée hydraulique axiale sur les assemblages de combustible de réacteur nucléaire, de façon à pouvoir supprimer les ressorts métalliques d'appui sur la partie supérieure des assemblages de combustible et à limiter les déplacement rapides et les chocs mécaniques consécutifs des assemblages de combustible lors de régimes transitoires. Pour cela, on fixe, sur les embouts des assemblages de combustible, des logements tubulaires en saillie par rapport à l'embout dans la direction axiale, fermés à une extrémité axiale fixée sur l'embout et ouvert à leur autre extrémité pour recevoir un pion de centrage qui s'engage de manière étanche ou pratiquement étanche à l'intérieur du logement. Le logement comporte, de plus, une ouverture calibrée au voisinage de l'embout, de manière telle que, lors des déplacements axiaux d'un assemblage de combustible dans le réacteur nucléaire en service, ces déplacements soient freinés et amortis par un passage d'eau dans l'ouverture calibrée. On peut disposer de plus, à l'intérieur du logement, une douille fendue comportant des branches flexibles dont le diamètre intérieur est légèrement inférieur au diamètre du doigt de centrage.

Un tel dispositif est complexe et nécessite une modification substantielle des embouts de l'assemblage de combustible. En particulier, il est très difficile de modifier des assemblages de combustible existants pour limiter les effets de compression exercés sur la structure de l'assemblage de combustible pour compenser la poussée hydraulique sur l'assemblage de combustible en service.

Le but de l'invention est donc de proposer un procédé de limitation des efforts de maintien exercés sur un assemblage de combustible d'un réacteur nucléaire pour compenser la poussée hydraulique d'eau de refroidissement traversant l'assemblage de combustible en service dans le réacteur nucléaire, l'assemblage de combustible comportant une ossature renfermant un faisceau de crayons de combustible parallèles entre eux fermée à ses extrémités par des embouts transversaux perpendiculaires à la direction longitudinale de l'assemblage de combustible suivant laquelle circule l'eau de refroidissement, chacun des embouts comportant au moins deux ouvertures traversantes axiales destinées à recevoir chacune un pion de centrage d'une plaque inférieure de support de coeur ou d'une plaque supérieure de coeur, ce procédé pouvant être mis en oeuvre sur des assemblages de combustible neufs ou sur des assemblages de combustible usagés, de manière à pouvoir utiliser des ressorts à lame de caractéristique plus faible exerçant une compression réduite sur l'assemblage de combustible et à limiter les déplacements ou chocs de l'assemblage de combustible dans le réacteur en service.

Dans ce but, on réalise la fabrication et l'approvisionnement d'une douille élastique d'engagement frottant d'un pion de centrage, pour au moins une ouverture de centrage, d'au moins un embout de l'assemblage de combustible, la douille élastique comportant un corps annulaire ayant une partie de fixation dont le diamètre extérieur est maximal et au moins égal au diamètre de l'ouverture de centrage de l'embout, suivant une partie de sa longueur axiale, au moins deux branches flexibles séparées l'une de l'autre par au moins deux fentes de direction axiale sur toute la longueur de la douille entre la partie de fixation et une extrémité axiale libre de la douille, suivant laquelle la douille présente un diamètre extérieur inférieur au diamètre de l'ouverture de centrage et une surface annulaire d'appui en saillie radiale à l'intérieur de la douille dans la partie d'extrémité libre des branches flexibles dont le diamètre intérieur est inférieur au diamètre des pions de centrage,

- on réalise les ouvertures de l'au moins un embout de l'assemblage de combustible à un diamètre sensiblement égal au diamètre extérieur de la partie de fixation de la douille élastique, et
- on fixe une douille élastique dans l'ouverture de l'embouts de l'assemblage de combustible.

Suivant des modes particuliers de mise en oeuvre :

- la douille élastique est fixée dans l'ouverture de l'embout de l'assemblage de combustible par l'un au moins des procédés suivants : sertissage, dudgeonnage, soudage, vissage ;
- on fixe des douilles élastiques dans les ouvertures traversantes de seulement l'un des embouts de l'assemblage de combustible et de préférence dans les ouvertures traversantes de l'embout inférieur ;
- on fixe des douilles élastiques dans les ouvertures traversantes de chacun des embouts supérieur et inférieur de l'assemblage de combustible ;
- on réalise des douilles élastiques dont le diamètre intérieur est supérieur au diamètre d'une partie cylindrique d'engagement des pions de centrage, pour tenir compte de tolérances sur le diamètre de la partie cylindrique d'engagement du pion de centrage et sur l'écartement entre les pions de centrage destinés à être engagés dans l'embout d'assemblage de combustible ;
- on prévoit des portées de forme elliptique et des portées de forme circulaire de contact avec le pion de centrage sur la surface annulaire d'appui à l'intérieur de la douille, pour optimiser le contact et le frottement d'un pion de centrage avec la partie d'appui de la douille élastique, lors de déplacements de l'assemblage de combustible dans la direction verticale sous l'effet de la poussée hydraulique.

L'invention est également relative à un assemblage de combustible d'un réacteur nucléaire comportant une ossature renfermant un faisceau de crayons combustibles parallèles entre eux fermée à ses extrémités par des embouts transversaux perpendiculaires à la direction longitudinale de l'assemblage de combustible suivant laquelle circule de l'eau de refroidissement, chacun des embouts comportant au moins deux ouvertures traversantes axiales destinées à recevoir chacune un pion de centrage d'une plaque inférieure de coeur ou d'une plaque supérieure de coeur, caractérisé par le fait qu'à l'intérieur de l'au moins une ouverture traversante de l'un au moins des embouts de l'assemblage de combustible, est fixée une douille élastique comportant un corps annulaire ayant une partie de fixation dont le diamètre extérieur est maximal et au moins égal au diamètre de l'ouverture traversante suivant une partie de sa longueur axiale, au moins deux branches flexibles séparées l'une de l'autre par au moins deux fentes de direction axiale sur toute la longueur de la douille entre la partie de fixation et une extrémité libre de la douille, ayant un diamètre extérieur inférieur au diamètre de la partie de fixation et une surface annulaire d'appui en saillie radiale à l'intérieur de la douille dans une partie d'extrémité libre des branches flexibles dont le diamètre intérieur est inférieur au diamètre des pions de centrage destinés à être introduits dans les ouvertures de l'embout.

De préférence :

- les ouvertures traversantes de l'embout de l'assemblage de combustible dans lesquelles on fixe une douille élastique ont un diamètre sensiblement supérieur au diamètre des pions de centrage, le diamètre des ouvertures traversantes étant déterminé par l'équation suivante : DD = DB + DI - DC, dans laquelle DD est le diamètre de l'alésage de l'ouverture traversante de l'embout, DI est un diamètre intérieur de la partie courante de la douille élastique, DB est le diamètre extérieur des branches flexibles de la douille et DC est le diamètre de la partie d'appui intérieure des branches élastiques de la douille.
- le diamètre intérieur de la partie courante de la douille élastique est supérieur au diamètre d'un pion de centrage, pour tenir compte des tolérances sur le diamètre des pions de centrage et sur l'écartement des pions de centrage destinés à être introduits dans l'embout de l'assemblage de combustible.

Afin de bien faire comprendre l'invention, on va maintenant décrire à titre d'exemple un mode de réalisation du procédé suivant l'invention et d'une douille élastique utilisée pour la mise en oeuvre du procédé.

La figure 1 est une vue en perspective d'un assemblage de combustible d'un réacteur nucléaire à eau sous pression en position de service dans le coeur du réacteur nucléaire entre une plaque inférieure et une plaque supérieure de coeur.

La figure 2 est une vue en coupe axiale d'une douille élastique montée dans un embout d'assemblage de combustible, lors de la mise en oeuvre du procédé selon l'invention.

La figure 3 est une vue en coupe transversale suivant 3-3 de la figure 2.

Les figures 4A et 4B sont des vues de dessus de pions de centrage de la plaque inférieure de coeur d'un réacteur introduits dans deux douilles élastiques d'un embout inférieur d'assemblage de combustible.

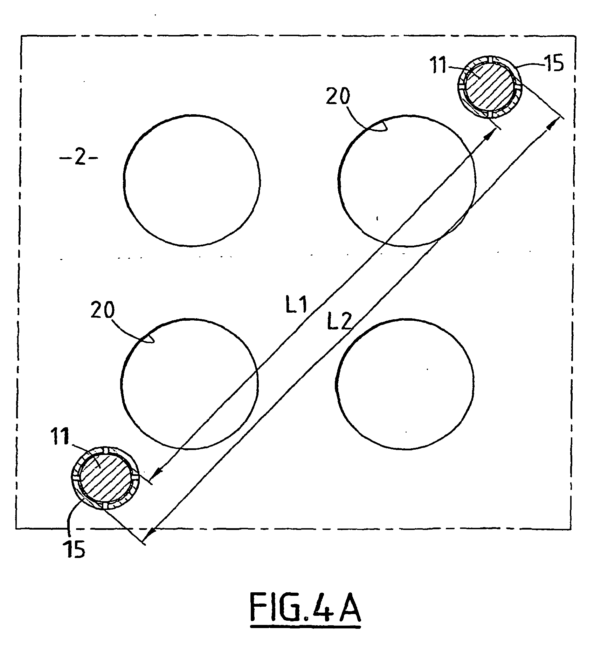

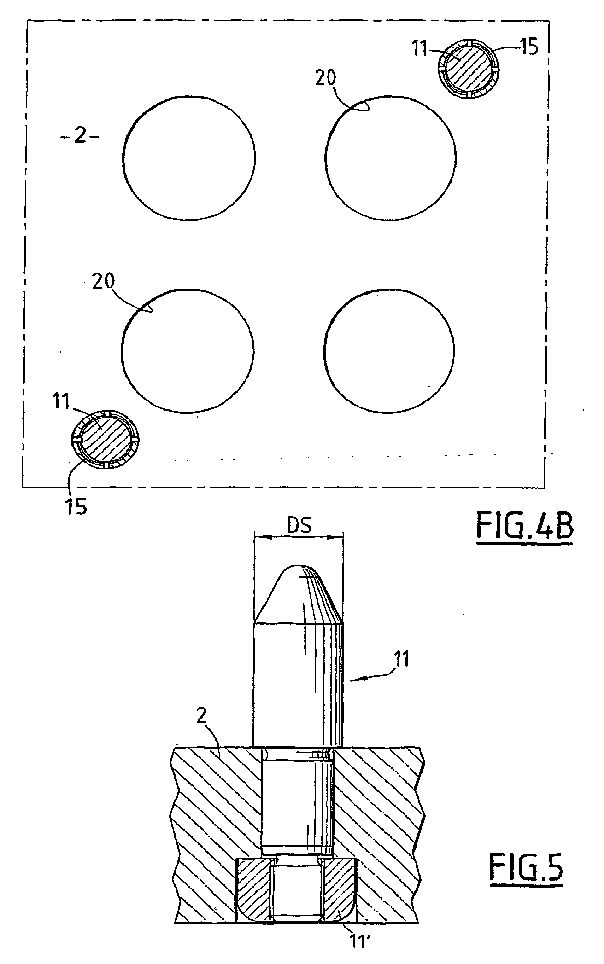

La figure 4A est relative à une première variante de réalisation et la figure 4B à une seconde variante de réalisation.

La figure 5 est une vue en élévation et en coupe partielle d'un pion de centrage de la plaque inférieure de support du coeur d'un réacteur nucléaire.

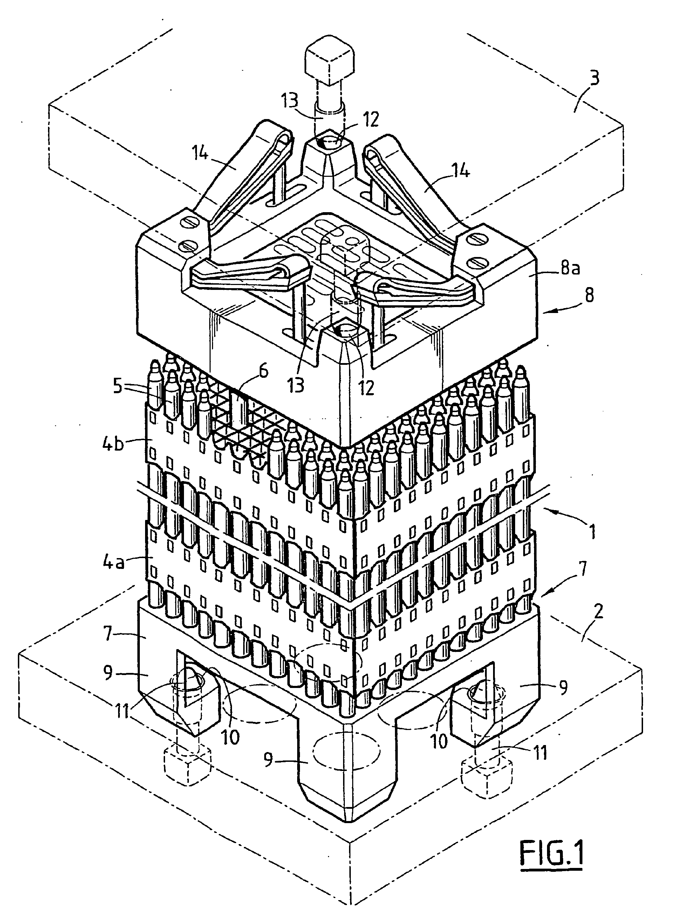

Sur la figure 1, on a représenté un assemblage de combustible d'un réacteur nucléaire refroidi par de l'eau sous pression désigné de manière générale par le repère 1, dans une position de service dans le coeur du réacteur nucléaire entre une plaque inférieure de coeur 2 et une plaque supérieure de coeur 3.

L'assemblage de combustible 1 comporte une ossature constituée principalement par des grilles-entretoises telles que 4a et 4b assurant le maintien de crayons combustibles 5 de l'assemblage de combustible sous la forme d'un faisceau dans lequel les crayons sont tous parallèles entre eux et maintenus dans des directions transversales à l'intérieur de cellules des grille-entretoises disposées suivant un réseau régulier à mailles carrées. L'ossature de l'assemblage de combustible comporte également des tubes-guides 6 d'une longueur supérieure à la longueur des crayons 5, un embout inférieur 7 et un embout supérieur 8 fixés aux extrémités des tubes-guides 6 en saillie axiale par rapport aux extrémités du faisceau de crayons 5.

L'embout inférieur 7 de l'assemblage de combustible comporte une plaque transversale de forme carrée et des pieds 9 solidaires de la plaque 7 au niveau de chacun de ses angles. L'assemblage de combustible 1, comme il est visible sur la figure 1, repose sur la plaque inférieure de coeur 2 par l'intermédiaire des pieds 9. Deux des pieds 9 disposés suivant une diagonale de l'embout 7 de forme carrée sont traversés par des ouvertures 10 dans chacune desquelles est introduit un pion de centrage 11 en saillie sur la surface supérieure de la plaque de support de coeur 2 sur laquelle on dépose l'assemblage de combustible, les pions 11 engagés dans les ouvertures 10 de deux pieds de l'assemblage de combustible permettant d'assurer le positionnement et le centrage de l'assemblage de combustible sur la plaque inférieure de coeur 2. La plaque inférieure de coeur 2 est traversée par des ouvertures de passage d'eau. Quatre ouvertures de passage d'eau sont généralement disposées à l'aplomb de chacun des assemblages de combustible 1 du coeur du réacteur nucléaire et débouchent en dessous de la plaque transversale de l'embout inférieur qui est traversée par des trous de passage d'eau calibrés assurant la répartition de l'eau de refroidissement du réacteur entre les crayons de combustible 5 du faisceau de l'assemblage de combustible.

Lors du chargement du coeur du réacteur nucléaire, les faces verticales planes délimitant les assemblages de combustible 1 de forme parallélépipédique à base carrée sont placées dans des positions adjacentes, les surfaces périphériques externes des grilles-entretoises des assemblages de combustible étant sensiblement en contact.

L'ossature de l'assemblage de combustible 1 comporte également un embout supérieur 8 fixé sur les parties d'extrémité supérieures des tubes-guides 6. L'embout supérieur 8 de l'assemblage de combustible qui est représenté sur la figure 1 comporte un cadre 8a à section carrée et une plaque transversale solidaire du cadre 8a et traversée par des ouvertures de passage de l'eau de refroidissement de l'assemblage de combustible.

Suivant deux angles du cadre 8a disposés suivant une diagonale de l'embout, sont ménagées deux ouvertures 12 destinées à recevoir chacune un pion de centrage 13 en saillie sous la plaque supérieure de coeur 3 du réacteur nucléaire, lors de la mise en place de la plaque supérieure de coeur 3 sur les assemblages de combustible chargés dans le coeur.

Suivant chacun des côtés du cadre 8a, est placé un ensemble de ressorts à lames 14 destiné à assurer le maintien de l'assemblage de combustible en dessous de la plaque supérieure de coeur 3. Chacun des ensembles de ressorts à lames 4 est fixé sur le cadre 8a de l'embout au niveau d'un angle du cadre 8a, la fixation des quatre ensembles de ressorts à lames étant assurée au niveau de deux angles du cadre disposés suivant la seconde diagonale du cadre 8a perpendiculaire à la diagonale suivant laquelle sont ménagées les ouvertures 12 d'engagement des pions 13 de la plaque supérieure de coeur.

Après le chargement du coeur du réacteur nucléaire, à l'intérieur de la cuve du réacteur, chacun des assemblages de combustible venant reposer dans une position déterminée sur la plaque inférieure de coeur, on remet en place au-dessus du coeur les équipements internes supérieurs du réacteur nucléaire comportant, à leur partie inférieure, la plaque supérieure de coeur dont les pions de guidage viennent s'engager dans les ouvertures des embouts supérieurs des assemblages de combustible. Les ressorts à lames 14 sont comprimés par le poids des équipements internes supérieurs et par la force de serrage induite par la fermeture du couvercle de la cuve, les forces de compression étant transmises à la structure de l'assemblage de combustible comportant l'ossature et le faisceau de crayons.

L'utilisation de ressorts à lames pour assurer l'appui de la plaque supérieure de coeur sur les assemblages de combustible est rendue nécessaire par le fait qu'il apparaît des dilatations différentielles entre les structures du réacteur nucléaire et les assemblages de combustible, lors de la montée en température dans le réacteur nucléaire jusqu'à la température de service. Les dilatations différentielles sont absorbées par les ressorts de compression 14 des assemblages de combustible.

Pendant le fonctionnement du réacteur nucléaire, de l'eau de refroidissement circule dans les assemblages de combustible à une très grande vitesse, de sorte que les assemblages de combustible sont soumis à une poussée hydraulique dans la direction verticale et de bas en haut, c'est-à-dire suivant le sens de circulation de l'eau de refroidissement. Pour supprimer ou limiter le plus possible les déplacements des assemblages de combustible sous l'effet de la poussée hydraulique, en particulier dans les phases transitoires de fonctionnement du réacteur, on utilise des ressorts à lames 14 ayant des caractéristiques élevées, c'est-à-dire des ressorts à lames par l'intermédiaire desquels on transmet des forces de compression importantes aux structures des assemblages de combustible. L'utilisation de ressorts de caractéristiques élevées permet de limiter ou de supprimer les déplacements verticaux des assemblages de combustible et les vibrations latérales, ce qui permet en particulier d'éviter des chocs violents des embouts inférieurs d'assemblages de combustible sur la plaque inférieure de coeur, après un soulèvement de l'assemblage de combustible sous l'effet de la poussée hydraulique.

Dans le but de limiter les forces de compression exercées sur les assemblages de combustible du coeur d'un réacteur nucléaire, on a imaginé de produire des forces s'opposant au déplacement vertical des assemblages de combustible sous l'effet de la poussée hydraulique, en plus des ressorts de maintien.

Suivant l'invention, la limitation des efforts de compression s'opposant à la poussée hydraulique est obtenue en créant un frottement mécanique entre les pions de centrage de l'une au moins des plaques inférieure et supérieure du coeur à l'intérieur des ouvertures de passage de l'un au moins des embouts des assemblages de combustible.

Le procédé suivant l'invention permet de réaliser ou modifier des assemblages neufs ou même des assemblages usagés pour obtenir une réduction substantielle ou une suppression des déplacements verticaux et des vibrations latérales d'assemblages de combustible dans le coeur du réacteur nucléaire sous l'effet de la poussée hydraulique, tout en limitant de manière substantielle les efforts de maintien exercés sur l'assemblage de combustible.

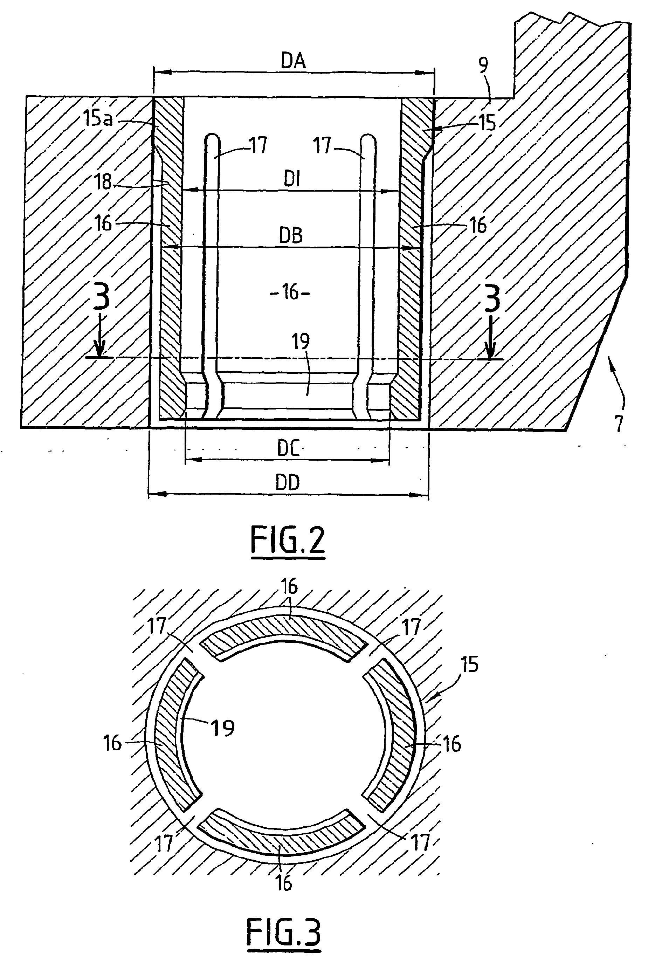

Les figures 2 et 3 sont relatives à la mise en oeuvre du procédé suivant l'invention par freinage de l'assemblage de combustible au niveau de son embout inférieur.

Sur la figure 2, on a représenté une partie d'un pied 9 d'un embout inférieur d'assemblage de combustible destiné à venir reposer sur la plaque inférieure de coeur du réacteur nucléaire.

Le procédé de limitation suivant l'invention consiste à introduire et à fixer, à l'intérieur d'une ouverture traversant le pied 9 de l'embout inférieur, une douille élastique 15 destinée à recevoir, dans son alésage interne, un pion de centrage de la plaque inférieure de coeur du réacteur nucléaire.

La douille élastique 15 est réalisée sous la forme d'une douille fendue comportant quatre branches flexibles 16 séparées l'une de l'autre par quatre fentes 17 de direction axiale s'étendant sur une partie de la longueur de la douille flexible 15.

La douille flexible 15 comporte une partie de fixation 15a à l'intérieur d'un trou 18 traversant le pied 9 de l'embout inférieur de l'assemblage de combustible. La partie de fixation 15a de la douille élastique est disposée à l'une des extrémités axiales de la douille 15 et s'étend sur une longueur axiale qui peut être par exemple de l'ordre de 10 % à 20 % de la longueur axiale totale de la douille élastique. Les branches élastiques 16 et les fentes 17 de la douille s'étendent suivant la partie restante de la douille, entre la partie de fixation 15a et une extrémité libre des branches flexibles 16.

Le diamètre extérieur de la douille tubulaire, dans sa partie de fixation 15a, est sensiblement égal au diamètre DA de l'ouverture 18 dans la partie supérieure du pied 9 de l'embout.

Comme représenté sur les figures 2 et 3, la douille est fixée à l'intérieur de l'ouverture 18 de l'embout. La douille 15 peut être fixée dans l'ouverture 18 du pied 9 de l'embout, soit par engagement en force ou sertissage, soit par soudage, dans le cas où les matériaux qui constituent le pied 9 de l'embout et la douille élastique 5 sont métallurgiquement compatibles.

Dans le cas de la fabrication d'un assemblage de combustible 9, le diamètre DA de l'ouverture 18 et donc le diamètre extérieur de la partie de fixation 15a de la douille élastique 15 peuvent être choisis de manière à pouvoir mettre en place une douille 15 ayant une épaisseur de paroi déterminée, en tenant compte du diamètre des pions de guidage de la plaque inférieure de coeur. Dans tous les cas bien entendu, le diamètre de l'ouverture 18 est supérieur au diamètre des pions de guidage qui doivent être introduits à l'intérieur de la douille élastique 15 fixée dans l'ouverture traversante 18 du pied 9 de l'embout inférieur.

Dans le cas d'un assemblage de combustible existant, par exemple un assemblage combustible neuf de type classique ou d'un assemblage de combustible usagé, les pieds 9 de l'embout inférieur de l'assemblage de combustible sont traversés par des ouvertures ayant un diamètre qui n'est que légèrement supérieur au diamètre des pions de guidage de la plaque inférieure de coeur. Dans ce cas, on effectue, pour la mise en place d'une douille 15 de dimensions optimisées, un réalésage de l'ouverture du pied de l'embout pour obtenir une ouverture 18 dans laquelle on puisse fixer la douille 15 par sa partie de fixation 15a.

La douille 15 comporte, à une extrémité libre de chacune de ses branches élastiques 16, à l'opposé de la partie de liaison de la branche élastique 16 à la partie de fixation 15a de la douille, un rebord 19 en saillie radiale vers l'intérieur de la douille, les quatre rebords en saillie des quatre branches élastiques 16 constituant une partie d'appui 19 sensiblement annulaire discontinue.

Les caractéristiques géométriques de la douille définissant le serrage et donc la force de frottement sur le doigt de serrage engagé dans la douille comportent en particulier le diamètre extérieur DB des branches élastiques de la douille, le diamètre intérieur DC des branches élastiques de la douille, au niveau de la surface d'appui 19 de forme annulaire sur un pion de centrage introduit dans la douille élastique 15 et le diamètre DD de la partie de l'alésage 18 en vis-à-vis de la partie d'extrémité libre des branches élastiques 16 de la douille 15.

Généralement, le diamètre DD est égal au diamètre DA, le trou 18 traversant le pied de l'embout ayant un diamètre constant. Toutefois, il est possible de prévoir un diamètre différent du trou 18 dans la zone de fixation de la douille et dans la partie recevant les branches élastiques 16.

Le diamètre intérieur d'appui DC des branches élastiques doit être égal au diamètre extérieur d'un pion de centrage de la plaque inférieure de coeur minoré d'une valeur de pincement qui peut être calculée en fonction de l'effort frottant recherché dans la direction verticale entre le pion de centrage et la douille flexible. Le calcul du pincement doit tenir compte de la longueur et de la raideur des branches flexibles et des sollicitations vibratoires latérales auxquelles est soumis l'assemblage de combustible.

Le diamètre intérieur DI de la douille élastique 15, en dehors de la partie d'appui 19, doit être supérieur au diamètre des pions de centrage de la plaque inférieure de coeur, de manière à tenir compte des incertitudes sur la position des pions de centrage de l'assemblage de combustible.

Afin de limiter le mouvement entre la douille et le pion de centrage de la plaque inférieure de coeur en situation accidentelle, on peut calculer le diamètre DD de la partie de l'alésage 18 situé en face des branches flexibles, en fonction des diamètres externes et internes des branches flexibles, par la formule suivante :

$$DD = DB + DI - DC.$$

De cette manière, le jeu diamétral autour des branches flexibles 16 de la douille 15 est égal au déplacement maximal des branches 16 déformées par flexion, lors de l'introduction d'un pion de centrage dans la douille 15. En outre, l'appui entre la douille 15 et le pion de centrage qui est réalisé au niveau de la surface d'appui 19 au voisinage des extrémités libres des branches flexibles 16 et située à proximité immédiate de la surface d'appui du pied 9 sur la plaque inférieure de coeur permet d'éviter des sollicitations en flexion sur le pion de centrage. En cas de sollicitation transversale en condition accidentelle, du fait de la valeur choisie par le calcul mentionné ci-dessus du diamètre DD, les branches flexibles 16 sont en appui sur la surface intérieure de l'ouverture 18 et le pion de centrage n'est pas sollicité en flexion, du fait qu'il est maintenu par une partie de sa surface voisine de la plaque inférieure de coeur.

Le calcul et la détermination du diamètre DD permet de réaliser l'alésage 18, par usinage ou par réusinage des pieds de l'embout inférieur de l'assemblage de combustible.

Pour obtenir une limitation substantielle des forces de compression à exercer sur l'assemblage de combustible pour assurer son maintien, il peut être nécessaire de placer des douilles élastiques, aussi bien dans les ouvertures de l'embout inférieur des assemblages de combustible que dans les ouvertures traversantes de l'embout supérieur. Dans ce cas, le freinage est réalisé aussi bien sur la surface des pions de guidage de la plaque inférieure de coeur que sur la surface des pions de la plaque supérieure de coeur.

On ne décrira pas la réalisation et le montage de douilles élastiques qui peuvent être placées dans les ouvertures 12 du cadre 8a de l'embout supérieur d'un assemblage de combustible, le montage de douilles de freinage élastiques dans les ouvertures de l'embout supérieur étant réalisé d'une manière analogue au montage de douilles élastiques dans les ouvertures traversantes de pieds de l'embout inférieur de l'assemblage de combustible.

Les douilles élastiques 15 peuvent être réalisées en un matériau à limite élastique élevée et qui soit peu sensible au fluage. On peut utiliser en particulier des alliages de nickel tels que l'alliage 750 ou l'alliage 718, un acier inoxydable martensitique tel que l'acier Z12CN13 ou encore le titane ou l'un de ses alliages. Les embouts d'assemblages de combustible étant généralement en un acier inoxydable austénitique, la fixation des douilles élastiques par frettage dans les ouvertures traversantes des embouts peut poser certains problèmes, du fait que les matériaux élastiques envisagés pour les douilles présentent des coefficients de dilatation inférieurs à ceux des aciers austénitiques. Dans certains cas, il est possible et préférable de réaliser la liaison entre la douille élastique et l'embout par soudage. Dans les autres cas, il peut être nécessaire de recourir à un assemblage vissé entre la douille élastique et l'embout, en prévoyant un blocage de l'assemblage vissé pour rendre la douille élastique indesserrable.

L'utilisation de douilles élastiques telles que les douilles qui viennent d'être décrites permet d'obtenir des efforts de frottement de quelques centaines de daN par embout et par exemple de 300 à 400 daN par assemblage.

L'obtention de tels efforts de frottement axiaux entre l'assemblage de combustible et les pions de centrage de l'assemblage permet de réduire considérablement l'effort de compression à exercer sur l'assemblage de combustible. La réduction de l'effort de compression obtenue peut être ainsi de 50 % ou plus, ce qui permet de ménager la structure de l'assemblage de combustible.

Sur la figure 5, on a représenté un pion 11 fixé sur la plaque inférieure de coeur 2, par l'intermédiaire d'un écrou 11' vissé sur une partie filetée du pion de centrage 11 engagé dans une ouverture traversant la plaque inférieure de coeur 2.

Comme il est visible sur la figure 4A, deux pions 11 sont fixés sur la plaque inférieure de coeur 2 à l'aplomb de chacun des assemblages de combustibles dans des dispositions permettant leur engagement dans deux ouvertures de l'embout inférieur de l'assemblage de combustible.

Les pions 11 sont disposés sur la plaque inférieure de coeur, de part et d'autre de deux trous de passage d'eau 20 destinés à assurer le passage d'eau d'alimentation vers l'assemblage de combustible.

On a représenté également, sur la figure 4A, deux douilles élastiques 15 suivant l'invention qui ont été engagées précédemment dans l'embout inférieur de l'assemblage de combustible destiné à venir reposer sur la plaque inférieure de coeur dans la position représentée sur la figure 4A, les douilles élastiques 15 fixées à l'intérieur des ouvertures traversantes de l'embout, comme décrit précédemment, venant s'engager sur les pions 11. Pour assurer un engagement des douilles élastiques 15 sur les pions 11 dans des conditions satisfaisantes, c'est-à-dire sans exercer d'efforts de flexion excessifs sur les pions 11, il est nécessaire de tenir compte, lors de la réalisation et de la fixation des douilles élastiques dans l'embout de l'assemblage de combustible, des tolérances admises sur le diamètre DS (voir figure 5) de la partie cylindrique du pion de centrage 11 et sur les distances L1 et L2 entre les génératrices les plus proches et les génératrices les plus éloignées de la surface cylindrique des pions de centrage.

On a effectué un relevé sur l'ensemble des pions de la plaque inférieure de coeur d'un réacteur nucléaire et on a déterminé les fourchettes maximales de variation des paramètres DS, L1 et L2.

On en a déduit le diamètre intérieur DI qu'il est nécessaire de prévoir pour les douilles élastiques.

Comme décrit précédemment, on en déduit le diamètre DD de l'alésage traversant l'embout qui doit être prévu ou ré-usiné pour le montage de la douille 15.

De plus, les douilles élastiques 15 doivent être montées, pour chacun des assemblages de combustible, dans une orientation permettant à la fois d'assurer un centrage facilité de la douille sur les pions 11 de la plaque inférieure de coeur 2 et un bon serrage des douilles assurant une force de frottement permettant de réduire notablement la force de compression à exercer sur l'assemblage de combustible.

Ces deux objectifs contradictoires peuvent être conciliés, comme représenté sur la figure 4B, en utilisant des douilles ayant des portées d'appui elliptiques et en orientant les douilles pour assurer un serrage plus élevé dans la direction perpendiculaire à la diagonale suivant laquelle sont disposées les douilles élastiques 15.

L'invention permet donc de réduire de manière simple et efficace la force de maintien nécessaire et donc la force de compression sur la structure d'un assemblage de combustible, ce qui permet d'utiliser des structures d'assemblage de combustible allégées.

L'invention ne se limite pas aux modes de réalisation qui ont été décrits.

C'est ainsi que les douilles élastiques peuvent présenter une forme différente de celle qui a été décrite et que les douilles élastiques peuvent être associées à tout autre moyen de freinage des déplacements verticaux de l'assemblage de combustible.

L'invention s'applique à tout type de réacteur nucléaire refroidi par de l'eau.

## Revendications

1.   Procédé de limitation des efforts de maintien exercés sur un assemblage de combustible (1) d'un réacteur nucléaire pour compenser la poussée hydraulique d'eau de refroidissement traversant l'assemblage de combustible (1) en service dans le réacteur nucléaire, l'assemblage de combustible comportant une ossature renfermant un faisceau de crayons combustibles (5) parallèles entre eux fermée à ses extrémités par des embouts transversaux (7, 8) perpendiculaires à la direction longitudinale de l'assemblage de combustible (1) suivant laquelle circule l'eau de refroidissement, chacun des embouts (7, 8) comportant au moins deux ouvertures de centrage traversantes axiales (10, 12) destinées à recevoir chacune un pion de centrage (11, 13) d'une plaque inférieure de support de coeur (2) ou d'une plaque supérieure de coeur (3), **caractérisé par le fait qu'**on réalise la fabrication d'une douille élastique d'engagement avec frottement (15) d'un pion de centrage (11, 13), pour au moins une ouverture de centrage de l'un au moins des embouts (7, 8) de l'assemblage de combustible (1), la douille élastique comportant un corps annulaire ayant une partie de fixation (15a) dont le diamètre extérieur est maximal et au moins égal au diamètre de l'ouverture de centrage (10, 12, 18) de l'embout (7, 8), suivant une partie de sa longueur axiale, au moins deux branches flexibles (16) séparées l'une de l'autre par au moins deux fentes (17) de direction axiale sur toute la longueur de la douille élastique (15) entre sa partie de fixation (15a) et une extrémité libre de la douille (15), la partie de la douille comprenant les branches flexibles (16) ayant un diamètre extérieur inférieur au diamètre de l'ouverture de centrage et une surface annulaire d'appui (19) en saillie radiale à l'intérieur de la douille (15) dans la partie d'extrémité libre des branches flexibles (16) dont le diamètre intérieur est inférieur au diamètre des pions de centrage (11, 13), qu'on réalise ladite ouverture (10, 12, 18) de l'au moins un embout (7, 8) de l'assemblage de combustible (1) à un diamètre sensiblement égal au diamètre extérieur de la partie de fixation (15a) de la douille élastique et qu'on fixe la douille élastique (15) dans ladite ouverture de l'au moins un embout (7, 8).

2.   Procédé suivant la revendication 1, **caractérisé par le fait que** la douille élastique (15) est fixée dans l'ouverture (10, 12) de l'embout (7, 8) de l'assemblage de combustible par l'un au moins des procédés suivants : sertissage, dudgeonnage, soudage, vissage.

3.   Procédé suivant la revendication 1, **caractérisé par le fait qu'**on fixe des douilles élastiques (15) dans les ouvertures traversantes (10, 12, 18) de seulement l'un des embouts (7, 8) de l'assemblage de combustible et de préférence dans les ouvertures traversantes (10, 18) de l'embout inférieur (7).

4.   Procédé suivant l'une quelconque des revendications 1 et 2, **caractérisé par le fait qu'**on fixe des douilles élastiques (15) dans les ouvertures traversantes de chacun des embouts supérieur (8) et inférieur (9) de l'assemblage de combustible.

5.   Procédé suivant l'une quelconque des revendications 1 à 4, **caractérisé par le fait qu'**on réalise des douilles élastiques dont le diamètre intérieur (DI) est supérieur au diamètre d'une partie cylindrique d'engagement des pions de centrage (11, 13), pour tenir compte de tolérances sur le diamètre de la partie cylindrique d'engagement du pion de centrage et sur l'écartement entre les pions de centrage destinés à être engagés dans l'embout d'assemblage de combustible.

6.   Procédé suivant l'une quelconque des revendications 1 à 5, **caractérisé par le fait qu'**on prévoit des portées de forme elliptique et des portées de forme circulaire de contact avec le pion de centrage (11, 13) sur la surface annulaire d'appui (19) à l'intérieur de la douille (15), pour optimiser le contact et le frottement d'un pion de centrage (11, 13) avec la partie d'appui (19) de la douille élastique (15), lors de déplacements de l'assemblage de combustible dans la direction verticale sous l'effet de la poussée hydraulique.

7.   Assemblage de combustible d'un réacteur nucléaire comportant une ossature renfermant un faisceau de crayons combustibles (5) parallèles entre eux fermée à ses extrémités par des embouts transversaux (8, 9) perpendiculaires à la direction longitudinale de l'assemblage de combustible (1) suivant laquelle circule de l'eau de refroidissement, chacun des embouts (7, 8) comportant au moins deux ouvertures traversantes axiales (10, 12, 18) destinées à recevoir chacune un pion de centrage (11, 13) d'une plaque inférieure de coeur (2) ou d'une plaque supérieure de coeur (3), **caractérisé par le fait qu'**à l'intérieur d'au moins une ouverture traversante (10, 12) de l'un au moins des embouts (7, 8) de l'assemblage de combustible (1), est fixée une douille élastique (15) comportant un corps annulaire ayant une partie de fixation (15a) dont le diamètre extérieur est maximal et au moins égal au diamètre de l'ouverture traversante (10, 12) suivant une partie de sa longueur axiale, au moins deux branches flexibles (16) séparées l'une de l'autre par au moins deux fentes (17) de direction axiale sur toute la longueur de la douille (15) entre la partie de fixation (15a) et une extrémité libre de la douille, ayant un diamètre extérieur inférieur au diamètre de la partie de fixation (15a) et une surface annulaire d'appui (19) en saillie radiale à l'intérieur de la douille (15) dans une partie d'extrémité libre des branches flexibles (16) dont le diamètre intérieur est inférieur au diamètre des pions de centrage (11, 13) destinés à être introduits dans les ouvertures de l'embout.

8. Assemblage de combustible suivant la revendication 7, **caractérisé par le fait que** les ouvertures traversantes (10, 12, 18) de l'embout de l'assemblage de combustible dans lesquelles on fixe une douille élastique (15) ont un diamètre sensiblement supérieur au diamètre des pions de centrage (11, 13), le diamètre des ouvertures traversantes étant déterminé par l'équation suivante : DD = DB + DI - DC, dans laquelle DD est le diamètre de l'alésage de l'ouverture traversante (18) de l'embout (7), DI est un diamètre intérieur de la partie courante de la douille élastique (15), DB est le diamètre extérieur des branches flexibles (16) de la douille (15) et DC est le diamètre de la partie d'appui intérieure des branches élastiques (16) de la douille (15).

9. Assemblage de combustible suivant la revendication 7, **caractérisé par le fait que** le diamètre intérieur (DI) de la partie courante de la douille élastique (15) est supérieur au diamètre d'un pion de centrage (11, 13), pour tenir compte des tolérances sur le diamètre des pions de centrage et sur l'écartement des pions de centrage (11, 13) destinés à être introduits dans l'embout (8, 9) de l'assemblage de combustible.

**Claims**

1. Method for limiting retention forces applied to a fuel assembly (1) of a nuclear reactor in order to compensate for the hydraulic thrust of cooling water passing through the fuel assembly (1) which is being used in the nuclear reactor, the fuel assembly comprising a framework which comprises a bundle of mutually parallel fuel rods (5) and which is closed at the ends thereof by means of transverse end-pieces (7, 8) which are perpendicular relative to the longitudinal direction of the fuel assembly (1) in which the cooling water flows, each of the end-pieces (7, 8) comprising at least two axial centering through-holes (10, 12) which are each intended to receive a centering pin (11, 13) of a lower core support plate (2) or an upper core plate (3), **characterised in that** a resilient bushing (15) is produced for frictional engagement with a centering pin (11, 13), for at least one centering hole of at least one of the end-pieces (7, 8) of the fuel assembly (1), the resilient bushing comprising an annular body which has a fixing portion (15a) whose outer diameter is greatest and at least equal to the diameter of the centering hole (10, 12, 18) of the end-piece (7, 8), along a portion of the axial length thereof, at least two flexible branches (16) which are separated from each other by means of at least two apertures (17) having an axial direction over the entire length of the resilient bushing (15) between the fixing portion (15a) thereof and a free end of the bushing (15), the portion of the bushing comprising the flexible branches (16) having an outer diameter which is less than the diameter of the centering hole and an annular support surface (19) which protrudes radially inside the bushing (15) into the free end portion of the flexible branches (16) whose inner diameter is less than the diameter of the centering pins (11, 13), **in that** the hole (10, 12, 18) of the at least one end-piece (7, 8) of the fuel assembly (1) is produced so as to have a diameter which is substantially equal to the outer diameter of the fixing portion (15a) of the resilient bushing and **in that** the resilient bushing (15) is fixed in the hole of the at least one end-piece (7, 8) .

2. Method according to claim 1, **characterised in that** the resilient bushing (15) is fixed in the hole (10, 12) of the end-piece (7, 8) of the fuel assembly by at least one of the following methods: crimping, tube rolling, welding, screwing.

3. Method according to claim 1, **characterised in that** resilient bushings (15) are fixed in the through-holes (10, 12, 18) of only one of the end-pieces (7, 8) of the fuel assembly and preferably in the through-holes (10, 18) of the lower end-piece (7).

4. Method according to either claim 1 or claim 2, **characterised in that** resilient bushings (15) are fixed in the through-holes of each of the upper end-piece (8) and lower end-piece (9) of the fuel assembly.

5. Method according to any one of claims 1 to 4, **characterised in that** resilient bushings are produced whose inner diameter (D1) is greater than the diameter of a cylindrical engagement portion of the centering pins (11, 13) in order to take into account tolerances with respect to the diameter of the cylindrical engagement portion of the centering pin and with respect to the spacing between the centering pins which are intended to be engaged in the end-piece of the fuel assembly.

6. Method according to any one of claims 1 to 5, **characterised in that** elliptical supports and circular supports are provided for contact with the centering pin (11, 13) on the annular support surface (19) inside the bushing (15) in order to optimise the contact and the friction of a centering pin (11, 13) with the support portion (19) of the resilient bushing (15) when the fuel assembly moves in a vertical direction under the action of the hydraulic thrust.

7. Fuel assembly of a nuclear reactor, comprising a framework which comprises a bundle of mutually parallel fuel rods (5) and which is closed at the ends thereof by means of transverse end-pieces (8, 9) which are perpendicular relative to the longitudinal direction of the fuel assembly (1) in which the cooling water flows, each of the end-pieces (7, 8) comprising at least two axial through-holes (10, 12, 18) which are each intended to receive a centering pin (11, 13) of a lower core plate (2) or an upper core plate (3), **characterised in that**, at the inner side of at least one through-hole (10, 12) of at least one of the end-pieces (7, 8) of the fuel assembly (1), a resilient bushing (15) is fixed and comprises an annular body which has a fixing portion (15a) whose outer diameter is greatest and at least equal to the diameter of the through-hole (10, 12), along a portion of the axial length thereof, at least two flexible branches (16) which are separated from each other by means of at least two apertures (17) having an axial direction over the entire length of the bushing (15) between the fixing portion (15a) and a free end of the bushing, having an outer diameter which is less than the diameter of the fixing portion (15a) and an annular support surface (19) which protrudes radially inside the bushing (15) into a free end portion of the flexible branches (16) whose inner diameter is less than the diameter of the centering pins (11, 13) which are intended to be introduced into the holes of the end-piece.

8. Fuel assembly according to claim 7, **characterised in that** the through-holes (10, 12, 18) of the end-piece of the fuel assembly in which a resilient bushing (15) is fixed have a diameter which is substantially greater than the diameter of the centering pins (11, 13), the diameter of the through-holes being determined by the following equation: DD = DB + DI - DC, where DD is the diameter of the opening of the through-hole (18) of the end-piece (7), DI is an inner diameter of the flow portion of the resilient bushing (15), DB is the outer diameter of the flexible branches (16) of the bushing (15) and DC is the diameter of the inner support portion of the resilient branches (16) of the bushing (15).

9. Fuel assembly according to claim 7, **characterised in that** the inner diameter (DI) of the flow portion of the resilient bushing (15) is greater than the diameter of a centering pin (11, 13) in order to take into account the tolerances with respect to the diameter of the centering pins and with respect to the spacing of the centering pins (11, 13) which are intended to be introduced into the end piece (8, 9) of the fuel assembly.

**Patentansprüche**

1. Verfahren zur Begrenzung der Haltekräfte, die auf ein Kernreaktor-Brennstabbündel (1) zur Kompensierung der hydraulischen Schubkraft des Kühlwassers wirken, welches das in dem Kernreaktor in Betrieb befindliche Brennstabbündel (1) durchquert, wobei das Brennstabbündel ein Gestell umfasst, das ein Bündel zueinander paralleler Brennstäbe (5) enthält und an seinen Enden durch transversale Endteile (7, 8) abgeschlossen ist, die senkrecht sind zu der Längsrichtung des Brennstabbündels (1), entsprechend der das Kühlwasser fließt, wobei jedes der Endteile (7, 8) wenigstens zwei Zentrierdurchgangsöffnungen (10, 12) umfasst, von denen jede dazu dient, ein Zentrierelement (11, 13) einer unteren Spaltraumplatte (2) oder einer oberen Spaltraumplatte (3) aufzunehmen,
**dadurch gekennzeichnet,**
**dass** man für mindestens eine der Zentrieröffnungen von wenigstens einem der Endteile (7, 8) des Brennstabbündels (1) eine elastische Hülse (15) zur Aufnahme eines Zentrierelements (11, 13) mit Reibungssitz realisiert, wobei die elastische Hülse einen ringförmigen Körper mit einem Befestigungsteil (15a) umfasst, dessen Außendurchmesser entsprechend eines Teils seiner axialen Länge maximal und mindestens gleich dem Durchmesser der Zentrieröffnung (10, 12, 18) des Endteils (7, 8) ist, mindestens zwei flexible Zweige (16) umfasst, voneinander getrennt durch wenigstens zwei Schlitze (17) mit axialer Richtung über die gesamte Länge der elastischen Hülse (15) zwischen seinem Befestigungsteil (15a) und einem freien Ende der Hülse (15), wobei der Teil der Hülse, der die flexiblen Zweige (16) umfasst, einen Außendurchmesser kleiner als der Durchmesser der Zentrieröffnung, und eine ringförmige Sitzfläche (19) aufweist, die im Innern der Hülse (15) in dem Bereich des freien Endes der flexiblen Zweige (16) radial hervorsteht und deren Durchmesser kleiner ist als der Durchmesser der Zentrierelemente (11, 13),
**dass** man die genannte Öffnung (10, 12, 18) von wenigstens einem Endteil (7, 8) des Brennstabbündels (1) mit einem Durchmesser realisiert, der im Wesentlichen gleich dem Außendurchmesser des Befestigungsteils (15a) der elastischen Hülse ist, und **dass** man die elastische Hülse (15) in der genannten Öffnung wenigstens eines Endteils (7, 8) befestigt.

2. Verfahren nach Anspruch 1, **dadurch gekenn-**

**zeichnet, dass** die elastische Hülse (15) in der Öffnung (10, 12) des Endteils (7, 8) des Brennstabbündels durch wenigstens eines der folgenden Verfahren befestigt wird: Quetschen bzw. Pressen, Aufweiten, Schweißen, Schrauben.

3. Verfahren nach Anspruch 1, **dadurch gekennzeichnet, dass** man elastische Hülsen (15) in den Durchgangsöffnungen (10, 12) von nur einem der Endteile (7, 8) des Brennstabbündels anbringt und vorzugsweise in den Durchgangsöffnungen (10, 18) des unteren Endteils (7).

4. Verfahren nach einem der Ansprüche 1 und 2, **dadurch gekennzeichnet, dass** man elastische Hülsen (15) in den Durchgangsöffnungen des oberen (8) und des unteren (9) Endteils des Brennstabbündels befestigt.

5. Verfahren nach einem der Ansprüche 1 bis 4, **dadurch gekennzeichnet, dass** man elastische Hülsen realisiert, deren Innendurchmesser (DI) größer ist als der Durchmesser eines zylindrischen Eingriffteils der Zentrierelemente (11, 13), um den Toleranzen in Bezug auf den Durchmesser des zylindrischen Eingriffteils der Zentrierelemente und in Bezug auf den Abstand zwischen den Zentrierelementen Rechnung zu tragen, die dazu bestimmt sind, in das Endteil des Brennstabbündels einzugreifen.

6. Verfahren nach einem der Ansprüche 1 bis 5, **dadurch gekennzeichnet, dass** man auf der ringförmigen Sitzfläche (19) im Innern der Hülse (15) für den Kontakt mit dem Zentrierelement (11, 13) Stützflächen von elliptischer Form und Stützflächen von kreisrunder Form vorsieht, um den Kontakt und die Reibung eines Zentrierelements (11, 13) mit dem ringförmigen Sitz (19) der elastischen Hülse (15) bei vertikalen Verschiebungen des Brennstabbündels unter der Wirkung der hydraulischen Schubkraft zu optimieren.

7. Brennstabbündel eines Kernreaktors mit einem Gestell, das ein Bündel zueinander paralleler Brennstäbe (5) enthält und an seinen Enden durch transversale Endteile (7, 8) abgeschlossen ist, die senkrecht sind zu der Längsrichtung des Brennstabbündels (1), entsprechend der das Kühlwasser fließt, wobei jedes der Endteile (7, 8) wenigstens zwei Zentrierdurchgangsöffnungen (10, 12, 18) umfasst, von denen jede dazu dient, ein Zentrierelement (11, 13) einer unteren Spaltraumplatte (2) oder einer oberen Spaltraumplatte (3) aufzunehmen, **dadurch gekennzeichnet, dass** im Innern von mindestens einer Durchgangsöffnung (10, 12) von wenigstens einem der Endteile (7, 8) des Brennstabbündels (1) eine elastische Hülse (15) zur Aufnahme eines Zentrierelements (11, 13) mit Reibungssitz befestigt ist, die einen ringförmigen Körper mit einem Befestigungsteil (15a) umfasst, dessen Außendurchmesser entsprechend eines Teils seiner axialen Länge maximal und mindestens gleich dem Durchmesser der Durchgangsöffnung (10, 12) ist, und mindestens zwei flexible Zweige (16) umfasst, voneinander getrennt durch wenigstens zwei Schlitze (17) von axialer Richtung über die gesamte Länge der elastischen Hülse (15) zwischen seinem Befestigungsteil (15a) und einem freien Ende der Hülse, der einen Außendurchmesser hat, der kleiner ist als der Durchmesser des Befestigungsteils (15a), und eine ringförmige Sitzfläche (19) aufweist, die im Innern der Hülse (15) in einem freien Endbereich der flexiblen Zweige (16) radial hervorsteht und deren Durchmesser kleiner ist als der Durchmesser der Zentrierelemente (11, 13), die dazu bestimmt sind, in die Öffnungen des Endteils eingeführt zu werden.

8. Brennstabbündel nach Anspruch 7, **dadurch gekennzeichnet, dass** die Durchgangsöffnungen (10, 12, 18) des Brennstabbündels, in denen man eine elastische Hülse (15) befestigt, einen Durchmesser haben, der wesentlich größer ist als der Durchmesser der Zentrierelemente (11, 13), wobei der Durchmesser der Durchgangsöffnungen durch folgende Gleichung festgelegt wird: $DD = DB + DI - DC$, in der DD der Bohrungsdurchmesser der Durchgangsöffnung (18) des Endteils (7) ist, DI der Innendurchmesser des Durchgangsteils der elastischen Hülse (15) ist, DB der Außendurchmesser der flexiblen Zweige (16) der Hülse (15) ist und DC der Durchmesser des Innenabstützungsteils der elastischen Zweige (16) der Hülse (15) ist.

9. Brennstabbündel nach Anspruch 7, **dadurch gekennzeichnet, dass** der Innendurchmesser DI des Durchgangsteils der elastischen Hülse (15) größer ist als der Durchmesser eines Zentrierelements (11, 13), um den Toleranzen bezüglich des Durchmessers der Zentrierelemente und bezüglich des Abstands der Zentrierelemente (11, 13) Rechnung zu tragen, die dazu bestimmt sind, in das Endteil (8, 9) einzugreifen.

FIG.1

EP 1 697 947 B1

FIG.2

FIG.3

13

FIG.4 A

-2-

20

11 — 15

20

11

15

FIG.4B

DS

11

2

11'

FIG.5

## RÉFÉRENCES CITÉES DANS LA DESCRIPTION

**Documents brevets cités dans la description**

• FR 2479535 A